# EUROPÄISCHE PATENTSCHRIFT

(11) **EP 2 986 873 B1**
(45) Veröffentlichungstag und Bekanntmachung des Hinweises auf die Patenterteilung: **10.01.2018**
(21) Anmeldenummer: 14716580.7
(22) Anmeldetag: 10.04.2014
(51) Int. Cl.: F16K 1/08, F16K 1/38, F16K 1/42, F16K 25/00

(54) **AUFBAU EINER METALLISCH DICHTENDEN SCHRÄGSITZGEOMETRIE MITTELS LASERSCHMELZEN**
CONSTRUCTION OF A METALLICALLY SEALING ANGLE SEAT GEOMETRY BY MEANS OF LASER MELTING
CONSTRUCTION D'UNE GÉOMÉTRIE DE SIÈGE OBLIQUE À ÉTANCHÉITÉ MÉTAL SUR MÉTAL PAR FUSION LASER

(30) Priorität: 15.04.2013 DE 102013206665; 04.04.2014 DE 102014206505
(43) Veröffentlichungstag der Anmeldung: 24.02.2016
(73) Patentinhaber: KSB Aktiengesellschaft, 67227 Frankenthal (DE)
(72) Erfinder: BODE, Georg, 67227 Frankenthal (DE)
(86) Internationale Anmeldenummer: PCT/EP2014/057295
(87) Internationale Veröffentlichungsnummer: WO 2014/170209

(56) Entgegenhaltungen:
- US-A- 4 009 865
- US-A- 5 826 856
- US-A- 5 837 960
- US-A1- 2005 116 391
- US-A1- 2011 278 490
- US-A1- 2012 126 162

## Beschreibung

Die Erfindung betrifft ein Hubventil mit einem in einem Armaturengehäuse schräg angeordneten Ventilsitz nach dem Oberbegriff des Anspruchs eins. Ventile sind in verschiedenen Ausführungen bekannt, wobei die Ausgestaltung eines Ventilsitzes unterschiedlich angelegt sein kann. Um bei geringer Baugröße einen maximalen Durchlass durch das Ventil zu ermöglichen, also den Durchlasswiderstand auf ein Minimum zu reduzieren, hat sich allgemein das schräge Anordnen des Ventilsitzes als vorteilhaft herausentwickelt.

Die DE 36 09 772 C2 zeigt ein Ventil mit einem schräg angeordneten Ventilsitz, wobei die spezielle Führung des Absperrkörpers für eine Abdichtung mit geringer Leckage sorgt.

Die DE 197 11 839 A1 zeigt ebenfalls ein Ventil mit Schrägsitz, bei dem die Form der Sitzfläche derart gewählt ist, dass die Dichtwirkung optimiert ist und die Sitzfläche durch spanabhebende Verfahren herstellbar ist. Diese kostengünstige Herstellung verhindert jedoch die weitere Optimierung der Form der Sitzfläche.

Die US 4 009 865 A zeigt einen Ventilsitz, bei dem der Ventilsitz von einer kegelförmigen Aussparung und zwei zylinderförmigen Innenwänden zweier Bohrungen und die Dichtlinie zwischen Verschlussteil und Ventilsitz von zwei kegelförmigen Aussparungen ausgebildet ist. Diese so genannte Y-förmige Ausführung, bei der die Spindel zur Durchflussrichtung geneigt ist, hat den Nachteil, dass Antriebssysteme nur schwer oder aufwändig anbringbar sind, wobei die Herstellung des Ventilsitzes einfach ist.

Der vorliegenden Erfindung liegt die Aufgabe zugrunde eine Schrägsitzgeometrie bei einem Ventilsitz in einem Armaturengehäuse mit einem Ein- und Austritt, wobei ein metallisches Verschlussteil vorgesehen ist, das an seiner Außenkontur kegelförmig ausgestaltet ist, zu schaffen, die einfach herstellbar und metallisch dichtend ist. Das Ventil soll durch einen Ventilantrieb auf einfache Weise erweiterbar sein.

Dies wird erreicht, indem der Ventilsitz in einer T-förmigen Ausgestaltung ausgeführt ist, wobei das metallische Gehäuse als Verschneidung von drei Kegeln ausgebildet ist, wobei zwei Kegel in dem Armaturengehäuse in einer Durchgangsöffnung so angelegt sind, dass der Ventilsitz als Kantensitz ausgebildet ist. Durch herkömmliche Herstellungsverfahren ist es nicht möglich, einen derartigen Ventilsitz zu fertigen. Weder zerspanende Bearbeitung noch Eingießen von Sitzringen ermöglichen die Schaffung eines metallisch dichtenden Sitzes. In einer weiteren Ausgestaltung der Erfindung sind die Bauteile des Sitzes mittels Laserschmelzen hergestellt. Bei der T-förmigen Ausgestaltung ist die Spindel senkrecht zum Durchfluss ausgerichtet. Dies hat den Vorteil, dass einfache Antriebssysteme ohne größeren Aufwand anbaubar sind. Die Sitzgeometrie ist jedoch wesentlich komplizierter zu konstruieren.

Bei einer Y-förmigen Ausgestaltung wie in oben genanntem Stand der Technik können aus einem Rohteil durch Bohr- und Drehbearbeitung zylinderförmige Konturen erzeugt werden. Mit dem Kegelförmigen Verschlussteil lässt sich ein Ventilsitz ausgestalten, der jedoch schwer mit Antriebssystemen ausstattbar ist. Anders ist dies bei der erfindungsgemäßen T-förmigen Ausgestaltung, bei der jedoch der komplette Ventilsitz als Schichtaufbau hergestellt werden muss, da die erfindungsgemäße Geometrie mit den vorhandenen Hinterschneidungen durch herkömmliche spanabhebende Verfahren nicht herstellbar ist.

Zum Schichtaufbau eignen sich Verfahren, die allgemein als 3D-Drucken bekannt sind. Entsprechend der Anwendungen der Armaturen sind Laserschmelzverfahren anzuwenden, bei denen ausgewählte Bereiche eines Metallpulvers in Schichten an einen darunter liegenden Körper angeschweißt werden. Die Oberfläche des Werkstücks, die später mit einem Fluid in Kontakt stehen wird, kann durch den Laserstrahl speziell geglättet oder im Bereich des Ventilsitzes gehärtet werden.

In einer Ausgestaltung der Erfindung schließt der Kegel der Außenkontur des Verschlussteils einen Öffnungswinkel σ von 25° bis 35° ein, speziell wird ein Winkel von 30° bevorzugt. Dieser Winkel wird so gewählt, dass eine maximale Dichtwirkung erreicht werden kann. Durch das Verschneiden zweier Kegelmantelflächen zu Herstellung eines Dichtsitzes im Ventilgehäuse entsteht eine Dichtlinie, mit der die Außenkontur des Verschlussteils zusammenwirkt. Entsprechend ist die Außenkontur so zu wählen, dass ein einfaches und sicheres Öffnen und Schließen und eine maximale Abdichtung des Ventils möglich ist.

In einer weiteren Ausgestaltung wird im Armaturengehäuse ein Ventilsitz gebildet aus einem ersten Kegel mit einem Öffnungswinkel α von 5° bis 15°, bevorzugt 7,5° und aus einem zweiten Kegel mit einem Öffnungswinkel β von 45° bis 60°, bevorzugt einem Winkel von 55°. Durch die Überlagerung der beiden Kegel entsteht eine klar definierte Dichtlinie, die mit dem Verschlussteil eine metallisch dichtende Sitzgeometrie bildet. Der große Öffnungswinkel des zweiten Kegels ermöglicht ein sicheres Annähern des Verschlussteils ohne im Rahmen der üblichen Toleranzen bei Fertigung und Anwendung zu übermäßigem Verschleiß zu führen. Der Kleine Winkel des ersten Kegels hingegen gewährleistet die notwendige Dichtheit des Ventilsitzes.

In einer weiteren Ausgestaltung wird das Verschlussteil schräg aus dem Ventilsitz bewegt, wobei die Richtung um 30° bis 60° gegen das Armaturengehäuse geneigt ist, bevorzugt 45°. Dies reduziert die Belastung im Ventil und vermindert eine notwendige Umlenkung des Fluids. Erfindungsgemäß sind das Armaturengehäuse und das Verschlussteil aus korrosionsbeständigen, abriebfesten Werkstoffen hergestellt. Dies verhindert ungewollte Korrosion an dem Ventil.

Anhand eines Ausführungsbeispiels wird die Erfindung näher erläutert. Die Zeichnungen zeigen eine erfindungsgemäße Ventilsitzanordnung. Im Einzelnen zeigt die
Fig. 1 einen Schnitt durch eine Ausgestaltung einer erfindungsgemäßen Ventilsitzanordnung, die
Fig. 2 ein Detail A aus diesem Schnitt, umfassend den Gehäuseteil, die
Fig. 3 ein Detail A aus diesem Schnitt, umfassend den Ventilkegel und die
Fig. 4 die Anordnung des Ventilkegels im Gehäuseteil.

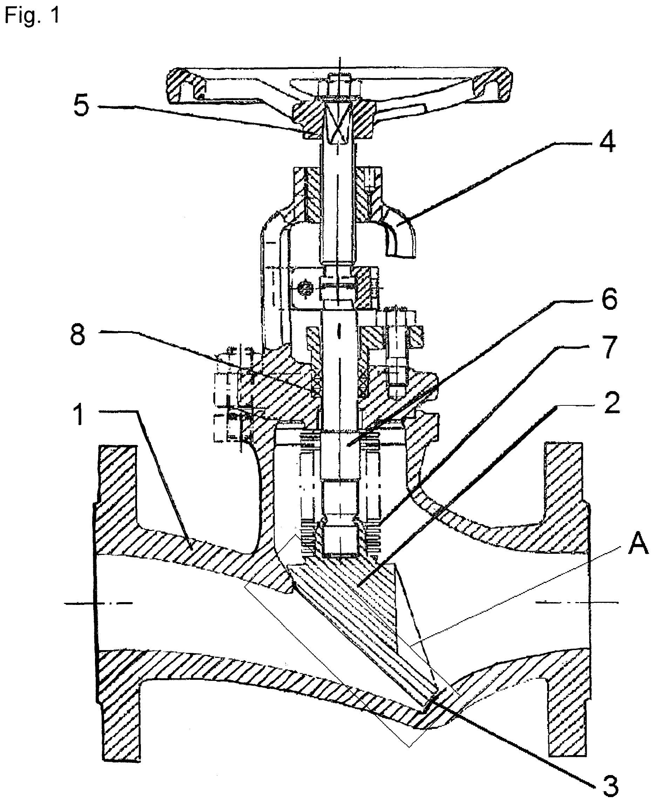

In der Fig. 1 ist eine Armatur in Form eines Hubventils dargestellt. An dem Gehäuse 1 ist ein Eintritts- und ein Austrittsflansch ausgeführt. Dazwischen befindet sich ein Ventilkegel 2, der das Absperrorgan bildet und das Gehäuse entlang eines Sitzrings 3 abdichtet. Der Sitzring 3 ist eine direkt in das metallische Gehäuse 1 eingearbeitete Passfläche, die den ebenfalls metallisch ausgeführten Ventilkegel 2 zur Abdichtung aufnimmt. Über einen Bügel 4 wird die Vorrichtung zum Heben und Senken des Ventilkegels 2 im Gehäuse 1 gehalten. Insbesondere ist hier ein Handrad 5 dargestellt, mittels dessen eine Spindel 6 zu auf- abwärts gerichteten Bewegungen angetrieben werden kann. Alternativ kann statt des Handrades 5 natürlich auch ein anderer Antrieb vorgesehen sein. Zur Abdichtung des Durchtritts der Spindel 6 durch das Gehäuse 1 ist eine Sicherheitsstopfbuchspackung 8 vorgesehen, bei der zusätzlich ein Faltenbalg 7 vorgesehen ist.

In der Fig. 1 ist das Ventil geschlossen dargestellt. Durch drehen am Handrad 5 wird die Spindel 6 so bewegt, dass sich der Ventilkegel 2 anhebt und den Weg zwischen Eintritt und Austritt freigibt. Die Schrägsitzanordnung vermindert die Umlenkung des Fluids im Bereich des Verschlusselements, also des Sitzrings 3, und ermöglicht gleichzeitig, das Ventil mit sehr geringer Baulänge auszuführen. Die wesentliche Schwierigkeit besteht jedoch darin, den Ventilsitz so auszuführen, dass er metallisch dichtend ist und der technische Aufwand so gering wie möglich gehalten wird. Aus der Figur ist zu erkennen, dass der Zugang zum Bereich des Sitzrings 3 sehr beschränkt ist.

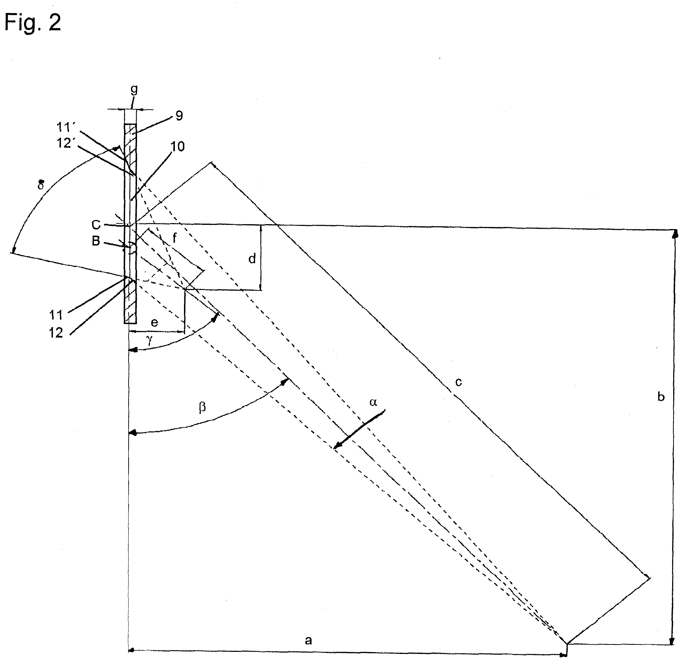

Zur genaueren Darstellung der Dichtflächen ist in der Fig. 1 ein Bereich A markiert, der als vergrößerter Ausschnitt in der Fig. 2 dargestellt ist.

Die Fig. 2 zeigt im Detail die Ausgestaltung der erfindungsgemäßen metallisch dichtenden Sitzpartie. Die beiden Komponenten, die diese Sitzpartie darstellen sind der in Fig. 1 gezeigte Ventilkegel 2 und eine Dichtpartie 9, mit der der Ventilkegel 2 zusammenwirkt und die hier im Detail gezeigt wird. Den eigentlichen Weg zwischen Einritt- und Austrittsöffnung des Ventils bildet eine Durchgangsöffnung 10, deren Randbereich im gezeigten Beispiel aus einer Überlagerung von zwei Ausschnitten aus verschiedenen Kegelmantelflächen gebildet wird. Hieraus ergibt sich eine erste Sitzfläche (11, 11'), die dem Ventilkegel 2 zugewandt ist und eine zweite Sitzfläche (12,12'). Diese daraus geformte Dichtpartie ist so ausgeformt, dass die zwei Kegelflächen in der Sitzpartie so übereinander gelegt sind, dass sie, wenn man die Dicke der Gehäusewand g betrachtet, etwa mittig die geringste Öffnung des Ventils ausbilden, wobei sich diese zu den beiden Gehäuseoberflächen hin vergrößert. Dadurch ergibt sich als wirksame Dichtpartie eine Dichtlinie, gebildet aus der Schnittkante der beiden Kegel des Sitzrings 3 und der Dichtpartie des Ventilkegels 2.

Die Form der zweiten Sitzfläche (12, 12') wird erreicht durch die Ausbildung eines Kegels mit einem Öffnungswinkel α, wobei dieser gegen die Fläche der Durchgangsöffnung 10 um β gedreht ist. Vom Zentrum C der Durchgangsöffnung 10 ist die Spitze des Kegels um eine Strecke a in Richtung senkrecht zur Durchgangsfläche 10 und um eine Strecke b parallel verschoben, wobei der Kegel eine Höhe c hat. Die erste Sitzfläche (11, 11') wird durch einen weiteren Kegel mit einem Öffnungswinkel δ gebildet, wobei dieser um einen Winkel γ gegen die Fläche der Durchgangsöffnung 10 gedreht ist und dessen Spitze einen Abstand d parallel zu Durchgangsöffnung 10 und e senkrecht dazu aufweist. Die Höhe dieses Kegels ist mit f dargestellt. Die Darstellung zeigt deutlich die schwierige Konstruktion der Dichtlinie, die bei der Herstellung einen kostspieligen Einsatz von exakt ausgerichteten Spezialwerkzeugen nötig macht, wenn die Form durch klassische span-abhebende Verfahren hergestellt werden soll. Im Rahmen der Herstellung der Sitzflächen durch ein Laserschmelzverfahren ist lediglich darauf zu achten, dass alle Stellen der Stize durch den Laser fertigbar sind. Dies ist insbesondere unproblematisch bei einer Herstellung in einem Schichtaufbau.

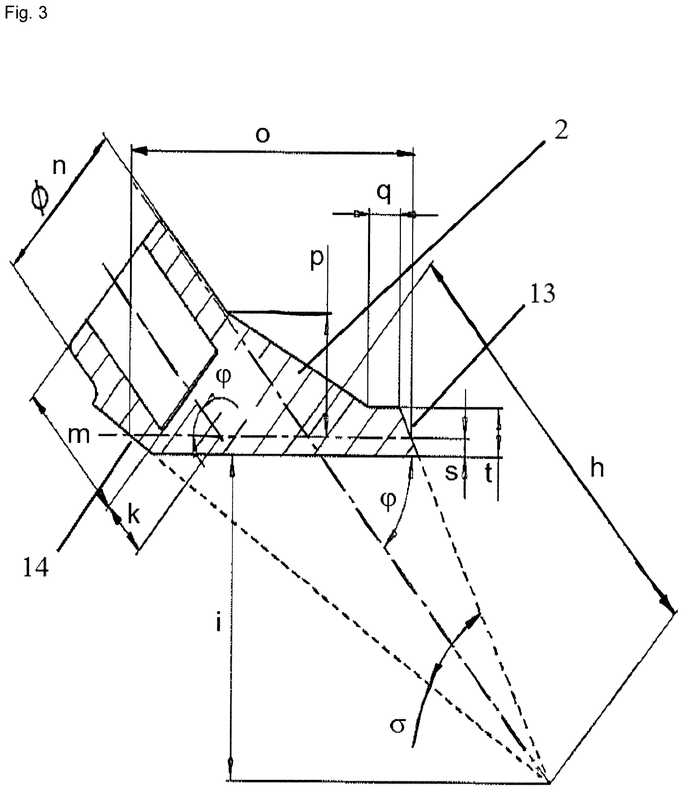

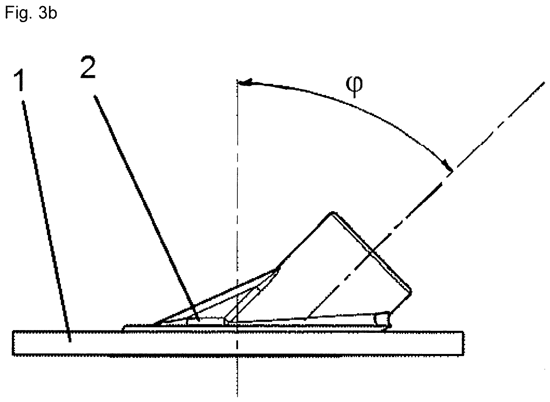

Die Fig. 3 zeigt den Ventilkegel 2 aus Fig. 1 in einer Detaildarstellung. Eine umlaufende Dichtfläche (13, 14) ist erkennbar als Abschnitt einer Kegelmantelfläche eines Kegels mit dem Öffnungswinkel σ und einer Höhe h. Der Kegel ist um ϕ gegen die Grundfläche des Ventilkegels 2 gekippt. Benachbart zur Dichtfläche 14 ist eine Aufnahme für eine Ventilbetätigung dargestellt. Diese ist ebenfalls um den Winkel ϕ gegen die Grundfläche gedreht angeordnet, damit der Ventilkegel 2 aus der Durchgangsöffnung (10 in Fig. 2) gehoben werden kann.

Die Fig. 3b zeigt den Ventilkegel 2 im Gehäuse 1, wobei der Winkel ϕ anzeigt in welcher Richtung der Ventilkegel 2 entfernt wird.

**Bezugszeichenliste**

| | |
|---|---|
| 1 Gehäuse | 11 erste Sitzfläche der Sitzpartie |
| 2 Ventilkegel | 11' erste Sitzfläche der Sitzpartie |
| 3 Sitzring | 12 zweite Sitzfläche der Sitzpartie |
| 4 Bügel | 12' zweite Sitzfläche der Sitzpartie |
| 5 Handrad | A Ausschnitt |
| 6 Spindel | B Ausgangspunkt |
| 7 Faltenbalg | C Ausgangspunkt |
| 8 Stopfbuchspackung | a - t Längenmaße |
| 9 Dichtpartie | α - ϕ Winkel |
| 10 Durchgangsöffnung | |

## Patentansprüche

1. Hubventil mit einem in einem metallischen Armaturengehäuse (1) schräg angeordneten Ventilsitz (3), mit einem Ein- und Austritt, wobei ein metallisches Verschlussteil (2) vorgesehen ist, das an seiner Außenkontur kegelförmig ausgestaltet ist, wobei die Dichtlinie zwischen dem Verschlussteil (2) und dem Ventilsitz (3) in dem Armaturengehäuse (1) als Verschneidung von drei Kegeln ausgebildet ist, wobei zwei Kegel in dem Armaturengehäuse in einer Durchgangsöffnung (10) so angelegt sind, dass der Ventilsitz als Kantensitz ausgebildet ist, wobei die Form einer zweiten Sitzfläche (12, 12') des Ventilsitzes (3) als Kegel mit einem Öffnungswinkel α ausbildbar ist, wobei dieser gegen die Fläche der Durchgangsöffnung (10) um einen Winkel β gedreht ist, wobei die Spitze des Kegels vom Zentrum (C) der Durchgangsöffnung (10) um eine Strecke a in Richtung senkrecht zur Durchgangsöffnung (10) und um eine Strecke b parallel verschoben ist, wobei der Kegel eine Höhe c hat, wobei eine erste Sitzfläche (11, 11') des Ventilsitzes (3) durch einen weiteren Kegel mit einem Öffnungswinkel δ gebildet wird, wobei dieser um einen Winkel γ gegen die Fläche der Durchgangsöffnung (10) gedreht ist und dessen Spitze einen Abstand d parallel zu Durchgangsöffnung (10) und e senkrecht dazu aufweist, wobei die Höhe dieses Kegels f beträgt, **dadurch gekennzeichnet, dass** die Bauteile de Sitzes mittels eines Schichtaufbauverfahrens hergestellt sind, dass das Armaturengehäuse (1) und das Verschlussteil (2) aus korrosionsbeständigen, abriebfesten Werkstoffen hergestellt sind, und dass der Ventilsitz in einer T-förmigen Ausgestaltung ausgeführt ist und eine Spindel (6) senkrecht zum Durchfluss ausgerichtet ist.

2. Hubventil nach Anspruch 1, **dadurch gekennzeichnet, dass** das Schichtaufbauverfahren ein Laserschmelzverfahren ist, wobei feinkörnige Metallpulverteilchen mittels der Energie aus einem Laserstrahl schichtweise zu dem Armaturengehäuse verschweißt werden.

3. Hubventil nach Anspruch 1, **dadurch gekennzeichnet, dass** der Kegel der Außenkontur des Verschlussteils (2) einen Öffnungswinkel σ von 25° bis 35° einschließt, bevorzugt einen Winkel von 30° aufweist.

4. Hubventil nach Anspruch 2, **dadurch gekennzeichnet, dass** der Kegel der Außenkontur des Verschlussteils (2) einen Öffnungswinkel σ von 30° einschließt.

5. Hubventil nach Anspruch 1, **dadurch gekennzeichnet, dass** im Armaturengehäuse ein Ventilsitz gebildet wird aus einem ersten Kegel mit einem Öffnungswinkel α von 5° bis 15°, bevorzugt 7,5° und aus einem zweiten Kegel mit einem Öffnungswinkel β von 45° bis 60° einschließt, bevorzugt einen Winkel von 55° aufweist.

6. Hubventil nach Anspruch 1, **dadurch gekennzeichnet, dass** im Armaturengehäuse ein Ventilsitz gebildet wird aus einem ersten Kegel mit einem Öffnungswinkel α von 7,5° und aus einem zweiten Kegel mit einem Öffnungswinkel β von 55°.

7. Hubventil nach Anspruch 1, **dadurch gekennzeichnet, dass** das Verschlussteil (2) schräg aus dem Ventilsitz bewegt wird, wobei die Richtung um 30° bis 60° gegen das Armaturengehäuse geneigt ist, bevorzugt 45°.

8. Hubventil nach einem der vorgenannten Ansprüche, **dadurch gekennzeichnet, dass** Bereiche des Ventilsitzes durch Nachbehandlung mittels eines Lasers, beispielsweise durch Aufschmelzen und Abkühlen, gehärtet sind.

## Claims

1. Globe valve having a valve seat (3) arranged at an angle in a metallic fitting housing (1) having an inlet and outlet, wherein provision is made of a metallic closure part (2) of conical configuration on the outer contour thereof,
wherein
the seal line between the closure part (2) and the valve seat (3) in the fitting housing (1) is formed as an intersection of three cones, wherein two cones are positioned in a through opening (10) in the fitting housing in such a way that the valve seat is formed as a marginal seat, wherein the shape of a second seat face (12, 12') of the valve seat (3) may be formed as a cone having an opening angle a, wherein said cone is rotated by an angle β toward the surface of the passage opening (10), wherein, from the centre (C) of the passage opening (10), the tip of the cone is displaced by a distance a in the direction perpendicular to the passage opening (10) and by a distance b in parallel, wherein the cone has a height c, wherein a first seat face (11, 11') of the valve seat (3) is formed by a further cone with an opening angle δ, said cone being rotated by an angle γ toward the surface of the passage opening (10) and the tip of said cone being at a distance d parallel to the passage opening (10) and e perpendicular thereto, wherein the height of said cone is f, **characterized in that** the components of the seat are produced by means of a layer construction method, **in that** the fitting housing (1) and the closure part (2) are produced from corrosion-resistant, abrasion-resistant materials, and **in that** the valve seat is implemented in a T-shaped configuration, and a spindle (6) is oriented perpendicular to the throughflow.

2. Globe valve according to Claim 1, **characterized in that** the layer construction method is a laser melting method, wherein fine-grained meta powder particles are welded layer by layer by means of the energy from a laser beam to form the fitting housing.

3. Globe valve according to Claim 1, **characterized in that** the cone of the outer contour of the closure part (2) encloses an opening angle σ of 25° to 35°, preferably has an angle of 30°.

4. Globe valve according to Claim 2, **characterized in that** the cone of the outer contour of the closure part (2) encloses an opening angle σ of 30°.

5. Globe valve according to Claim 1, **characterized in that** a valve seat is formed in the fitting housing from a first cone having an opening angle α of 5° to 15°, preferably 7.5°, and encloses from a second cone having an opening angle β of 45° to 60°, preferably has an angle of 55°.

6. Globe valve according to Claim 1, **characterized in that** a valve seat is formed in the fitting housing from a first cone having an opening angle α of 7.5°, and from a second cone having an opening angle β of 55°.

7. Globe valve according to Claim 1, **characterized in that** the closure part (2) is moved out of the valve seat at an angle, wherein the direction is inclined with respect to the fitting housing by 30° to 60°, preferably 45°.

8. Globe valve according to one of the preceding claims, **characterized in that** areas of the valve seat are hardened by after-treatment by means of a laser, for example by fusing and cooling.

## Revendications

1. Soupape à mouvement linéaire, comprenant un siège de soupape (3) disposé obliquement dans un boîtier d'armature métallique (1), avec une entrée et une sortie, une pièce de fermeture métallique (2) étant prévue, laquelle est réalisée sous forme conique sur son pourtour extérieur, la ligne d'étanchéité entre la pièce de fermeture (2) et le siège de soupape (3) dans le boîtier d'armature (1) étant réalisée sous forme d'intersection de trois cônes, deux cônes étant placés dans le boîtier d'armature dans une ouverture de passage (10) de telle sorte que le siège de soupape soit réalisé sous forme de siège à portée, la forme d'une deuxième surface de siège (12, 12') du siège de soupape (3) pouvant être réalisée sous forme de cône avec un angle d'ouverture α, celui-ci étant tourné d'un angle β par rapport à la surface de l'ouverture de passage (10), la pointe du cône étant déplacée depuis le centre (C) de l'ouverture de passage (10) d'une distance a dans la direction perpendiculaire à l'ouverture de passage (10) et d'une distance b parallèlement à celle-ci, le cône présentant une hauteur c ; une première surface de siège (11, 11') du siège de soupape (3) étant formée par un autre cône ayant un angle d'ouverture δ, celui-ci étant tourné d'un angle γ par rapport à la surface de l'ouverture de passage (10) et sa pointe présentant une distance d parallèlement à l'ouverture de passage (10) et une distance e perpendiculairement à celle-ci, la hauteur de ce cône valant f, **caractérisée en ce que** les composants du siège sont fabriqués au moyen d'un procédé de construction en couches, **en ce que** le boîtier d'armature (1) et la pièce de fermeture (2) sont fabriqués à partir de matériaux résistant à l'usure et anticorrosion, et **en ce que** le siège de soupape est réalisé en forme de T et une broche (6) est orientée perpendiculairement au flux.

2. Soupape à mouvement linéaire selon la revendication 1, **caractérisée en ce que** le procédé de construction en couches est un procédé de fusion laser, des particules de poudre métallique fines étant soudées au boîtier d'armature couches par couches au moyen de l'énergie provenant d'un faisceau laser.

3. Soupape à mouvement linéaire selon la revendication 1, **caractérisée en ce que** le cône de contour extérieur de la pièce de fermeture (2) présente un angle d'ouverture σ de 25° à 35°, de préférence présente un angle de 30°.

4. Soupape à mouvement linéaire selon la revendication 2, **caractérisée en ce que** le cône du contour extérieur de la pièce de fermeture (2) forme un angle d'ouverture σ de 30°.

5. Soupape à mouvement linéaire selon la revendication 1, **caractérisée en ce qu'**un siège de soupape est formé dans le boîtier d'armature à partir d'un premier cône ayant un angle d'ouverture α de 5° à 15°, de préférence de 7,5° et forme d'un deuxième cône ayant un angle d'ouverture β de 45° à 60°, de préférence présente un angle de 55°.

6. Soupape à mouvement linéaire selon la revendication 1, **caractérisée en ce qu'**un siège de soupape est formé dans le boîtier d'armature à partir d'un premier cône ayant un angle d'ouverture α de 7,5°, et à partir d'un deuxième cône ayant un angle d'ouverture β de 55°.

7. Soupape à mouvement linéaire selon la revendication 1, **caractérisée en ce que** la pièce de fermeture (2) est déplacée obliquement à partir du siège de soupape, la direction étant inclinée de 30° à 60° par rapport au boîtier d'armature, de préférence de 45° .

8. Soupape à mouvement linéaire selon l'une quelconque des revendications précédentes, **caractérisée en ce que** des régions du siège de soupape sont durcies par post-traitement au moyen d'un laser, par exemple par fusion et refroidissement.
